# EUROPEAN PATENT APPLICATION

(11) **EP 1 555 778 A1**
(43) Date of publication of application: **20.07.2005**
(21) Application number: 02774285.7
(22) Date of filing: 08.11.2002
(51) Int. Cl.: H04L 12/28

(54) **A POSITION SYSTEM AND METHOD FOR SUBSCRIBERS IN THE WIRELESS LOCAL AREA NETWORK**

(30) Priority: 28.09.2002 CN 02131077; 29.09.2002 CN 02131350
(71) Applicant: Huawei Technologies Co., Ltd., Guangdong, Shenzhen 518057 (CN)
(72) Inventor: LI, Zhiming, Huawei Service Centre Bldg., Shenzhen, Guangdong 518057 (CN); ZHANG, Wenlin, Huawei Service Centre Building, Shenzhen, Guangdong 518057 (CN)
(74) Representative: Mounteney, Simon James
(86) International application number: PCT/CN2002/000795
(87) International publication number: WO 2004/049628

(57) **Abstract**

The present invention discloses a user positioning system for Wireless Local Area Network (WLAN), comprising more than one User Equipment (UE) and a WLAN access part, and further comprising a positioning management subsystem for acquiring position information of WLAN users and providing the desired user position information to an application client which requests position information to the positioning management subsystem. Here, the positioning management subsystem is connected with both of the UEs and the application client. The positioning management subsystem further comprises a management unit for controlling information interaction course inside the positioning management subsystem and that between the positioning management subsystem and the outside, and a positioning information detection unit connected with said managing unit and used for acquiring user's position information and detecting change of user's position information. A method for implementing user positioning with the above system is disclosed also in the present invention. User positioning function in WLAN can be implemented with this system and method, and a high user positioning precision can be provided.

## Description

### Field of the Technology

The present invention relates to user-positioning technology in mobile communication, especially to a user positioning system for Wireless Local Area Network (WLAN) and method thereof.

### Background of the Invention

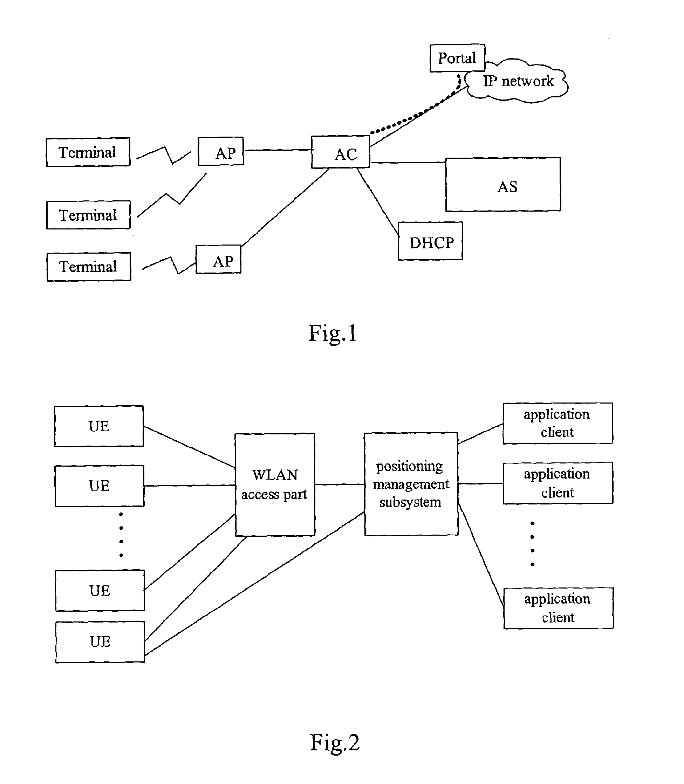

With the ever increasing of users' requirement for wireless accessing speed, WLAN is proposed, which is based on IEEE 802.11b/a standards and provides high-speed wireless data access technique within a small area. Here, IEEE 802.1 lb, which is applied more widely, usually adopts 2.4 GHz frequency band, while IEEE 802.11 a adopts 5 GHz frequency band. Figure 1 is a schematic diagram illustrating a typical network structure of conventional WLAN. As shown in Figure 1, WLAN is generally composed of an Access Point (AP), an Access Controller (AC), an Authenticating, authorization and accounting Sever (AS) and a Dynamic Host Configuration Protocol (DHCP) device. The AC not only connects all of APs, AS and DHCP, but also connects with an Internet Protocol (IP) network through a portal server simultaneously. User Equipments (UEs) are connected to APs in wireless mode, and accessed to the data network such as Internet through the AC which controls the users' access. Usually being the access part of WLAN, an AC and an AP can be either independent devices or synthesized in one single device. In practical application, a transmission rate as high as 11 Mbps can be obtained when 802.11b technique is adopted in WLAN, while a transmission rate as high as 54 Mbps can be obtained when 802.11a is adopted, with a lower equipment price.

Moreover, WLAN can be implemented by adopting other techniques, like Bluetooth and ETSI BRAN Hiperlan. Although there are different kinds of wireless access techniques, most WLANs are used for transmitting IP grouping data packets. As to a wireless IP network, the adopted specific WLAN access technique is usually transparent for the upper IP hierarchy. Basically, wireless access of users is implemented with APs, and an IP transmission network is formed through interlink between network controller devices and connection devices.

In order to provide rich and colorful services for the users, service providers are continuously putting forward new services, some of which are related with the user's current position, thus there is a demand of acquiring current position information of the user, i.e. positioning the current user. At present, in some of the mobile communication networks, like Global System for Mobile communications (GSM), General Packet Radio Service (GPRS) and Universal Mobile Transmission System (UMTS), user positioning function can be provided. Thereby the user's probable position area is confirmed according to position information of user's current cell and base station. However, since the covering scope of a base station in such networks as GSM and UMTS is a range between 500 m~1000 m, positioning of the user is confined within 1 kilometer's scope, thus it is unable to obtain more accurate positioning information. Relatively speaking, covering scope of a WLAN access point is much smaller, only dozens of meters, but no specific solving scheme has been put forward for providing user's positioning information in WLAN.

### Summary of the Invention

A main object of the present invention is to provide a user positioning system for WLAN in order to implement positioning for a user in WLAN.

Another object of the present invention is to provide a method for implementing user positioning in WLAN in order to conveniently position a WLAN user with high accuracy.

In order to achieve the above objects, the technical scheme is as follows.

A user positioning system for WLAN, comprising more than one User Equipment (UE) and a WLAN access part, and further comprising a positioning management subsystem for acquiring position information of WLAN users and providing the desired user position information to an application client which requests position information to the positioning management subsystem; wherein the positioning management subsystem is connected with both of the UEs and the application client, and the positioning management subsystem further comprises:
a management unit, for controlling information interaction process inside the positioning management subsystem and that between the positioning management subsystem and the outside; and
a positioning information detection unit connected with said managing unit, for acquiring users' position information and detecting change of users' position information.

Here, the positioning management subsystem is an independent device; or is a functional module disposed in an AS; or is a functional module disposed in a WLAN AC; or is a functional module disposed in an AP; or is a functional module disposed in a UE; or is a combination of more than one functional module respectively disposed in arbitrary multiple devices among AS, AP, AC and UE.

The positioning information detection unit is an independent device; or is a functional module disposed in an AS; or is a functional module disposed in a WLAN AC; or is a functional module disposed in an AP; or is a functional module disposed in a UE; or is a combination of more than one functional module respectively disposed in arbitrary multiple devices among AS, AP, AC and UE.

The positioning management subsystem further comprises a position information conversion unit for converting access point identification information to general geography position data. The general geography position data is denoted by latitude and longitude together with height above sea level, or denoted by geographical position area name or architecture area name.

A method for implementing user positioning with the above system in WLAN, comprising:
a. when demanding to acquire position information of a WLAN UE, an application client sending a user position information request to the positioning management subsystem; and
b. after receiving the user position information request, the positioning management subsystem acquiring position information of said WLAN UE, and placing the acquired position information in a user position information response, then sending said response to the application client.

Here, the position information of a WLAN UE is access point identification information of the access point to which the current UE is connected; or is data information with a format of general geographical position converted from the access point identification information of the access point to which the current UE is connected by the positioning management subsystem. The access point identification information is an access point identifier which is defined individually and used for uniquely identifying each access point in a positioning management subsystem service area, or is an identifier which is combined by a virtual local network identifier of the current access point and the connection port number of this access point in a network control server and used for uniquely identifying each access point in a positioning management subsystem service area.

The method may further comprise: after a WLAN UE enters a different access point, the positioning information detection unit transmitting the user position information to the positioning management subsystem which stores the received user position information; the positioning management subsystem fetching the desired position information of the UE from the user position information stored in itself. Here, the user position information is transmitted to the positioning management subsystem in the state of being placed in an existing information element of the user access authorization request message; or being placed in a newly-added information element of the user access authorization request message; or being placed in a position information transmission signaling which is set individually.

The method may further comprise: when detecting offline of the user, the positioning management subsystem immediately deleting position information of this user from the stored information; or setting position information of this user as invalid and deleting position information of this user after preservation for a certain period.

The method may further comprise: when detecting change of the access point to which the UE is connected, the positioning management subsystem immediately updating position information of this user in the interior position information storage unit.

The method may further comprise: after receiving the user position information request from the application client, the positioning management subsystem judging whether the stored position information of this user is consistent with this user's actual position information, if so, sending the stored position information to the application client; otherwise, updating the stored position information of this user and sending the updated position information to the application client. Here, the step of judging whether the stored position information of this user is consistent with this user's actual position information comprises: the management unit of the positioning management subsystem sending user's online state and a position confirmation message to the positioning information detection unit, and the position information storage unit performing judgment based on the returned confirmation message.

A method of acquiring position information of WLAN UE in step b comprises:
b11. after the positioning management subsystem receives the user position information request from the application client, the management unit sending a user WLAN position information request to the positioning information detection unit of the corresponding destination UE; and
b12. after receiving the user WLAN position information request, the positioning information detection unit of this destination UE returning the managing unit of the positioning management subsystem a user WLAN position information response carrying access point identification information of the current access point to which the destination UE is connected.

Step b11 may further comprise: after receiving the user position information request, the positioning management subsystem judging whether the application client is authorized to acquire position information of the destination UE, if so, executing step b12; otherwise, rejecting the user position information request.

The user WLAN position information request and user WLAN position information response are transmitted by way of a data transmission manner that can be provided by a network between the destination UE and the positioning management subsystem.

Another method of acquiring position information of WLAN UE in step b comprises:
b21. after the positioning management subsystem receives the user position information request from the application client, the management unit sending a user WLAN position information request to the positioning information detection unit of the AC; and
b22. after receiving the user WLAN position information request, the positioning information detection unit returning the managing unit of the positioning management subsystem a user WLAN position information response carrying access point identification information of the current access point to which the destination UE is connected.

Step b21 may further comprise: after receiving the user position information request, the positioning management subsystem judging whether the application client is authorized to acquire position information of the destination UE, if so, executing step b22; otherwise, rejecting the user position information request.

It can be seen from the above technical schemes that the key of the present invention lies in that a positioning management subsystem with user positioning functions is specially disposed, so that users in WLAN network can be positioned. In the positioning process, an access point covering area of WLAN is taken as the minimum unit for user positioning. When a user enters a different access point covering area of WLAN, identification information of the access point in which the user is located currently is taken as this user's position information, leading in simplicity of implementation of this invention. Moreover, since covering area of WLAN is small, the positioning precision is high.

Therefore, the user positioning system for WLAN and method thereof provided in the present invention have the following advantages and features:
1) With the present invention, WLAN service capability is enhanced by providing positioning service for WLAN users.
2) The intercommunication capability between WLAN network and other networks, which have positioning capability for users already, is enhanced.
3) In the present invention, a positioning management subsystem is newly disposed, specific position information of the current user is acquired based on identification information of AP to which the current user is connected, and is provided to the application client when needed, thus user positioning function for WLAN users is realized.
4) Since the covering area of an access point in WLAN is usually between 20 m~50 m in practical application, the user can be conveniently positioned in a certain area with 20 m-50 m precision based on the information of the access point to which the UE is connected.
5) The real-time quality is good since UEs participate in information transmission. Plentiful position related services can be provided without reconstructing the network, so that Universal Mobile Telecommunication System (UMTS) and other communication network can conveniently intercommunicate with WLAN in the aspect of position service.
6) In the interactive course for acquiring user positioning information according to the present invention, some existing processing flow or messages can be utilized, with little modification to the existing operation flow, thus it is easy and convenient to implement the present invention.

### Brief Description of the Drawings

Figure 1 is a schematic diagram illustrating network structure of a conventional WLAN.
Figure 2 is a schematic diagram illustrating structure of a user positioning system according to the present invention.
Figure 3 is a schematic diagram illustrating general structure of a positioning management subsystem according to the present invention.
Figure 4 is a schematic diagram illustrating structure of a positioning management subsystem according to the first embodiment of the present invention.
Figure 5 is a schematic diagram illustrating structure of a positioning management subsystem according to the second embodiment of the present invention.
Figure 6 is a schematic diagram illustrating structure of a positioning management subsystem according to the third embodiment of the present invention.
Figure 7 is a schematic diagram illustrating structure of a positioning management subsystem according to the fourth embodiment of the present invention.
Figure 8 is a schematic diagram illustrating structure of a positioning management subsystem according to the fifth embodiment of the present invention.
Figure 9 is a schematic diagram illustrating structure of a positioning management subsystem according to the sixth embodiment of the present invention.
Figure 10 is a schematic diagram illustrating structure of a positioning management subsystem according to the seventh embodiment of the present invention.
Figure 11 is a schematic diagram illustrating structure of a positioning management subsystem according to the eighth embodiment of the present invention.
Figure 12 is a schematic diagram illustrating flowchart of a method according to the present invention.
Figure 13 is a flowchart of a method for implementing user positioning according to an embodiment of the present invention.
Figure 14 is a flowchart of a method for implementing user positioning according to another embodiment of the present invention.
Figure 15 is a flowchart of a method for implementing user positioning according to still another embodiment of the present invention.

### Detailed Description of the Invention

Now, the present invention will be described in detail hereinafter with reference to the accompanying drawings and preferred embodiments.

As shown in Figure 2, the present invention provides a system with user-positioning function in WLAN. This positioning system comprises multiple UEs, a WLAN access part and a positioning management subsystem. This positioning management subsystem is dynamically connected with UEs and application clients in wireless manner either directly or indirectly, that is, a connection is established when positioning information of the user is required. The positioning management subsystem can be directly connected with UEs in order to acquire information, or can be indirectly connected with UEs via an AC which is connected with UEs, or via a certain intermediate network, such as a mobile communication network in 3GPP. The positioning management subsystem is connected with application clients either directly or via a certain intermediate network. Here, a UE usually is a mobile station; a WLAN access part comprises at least an AP and an AC; an application client can be a kind of service application, or just a UE. The application client, located either inside or outside the WLAN, will send a request to the positioning management subsystem when position information of a certain user is required.

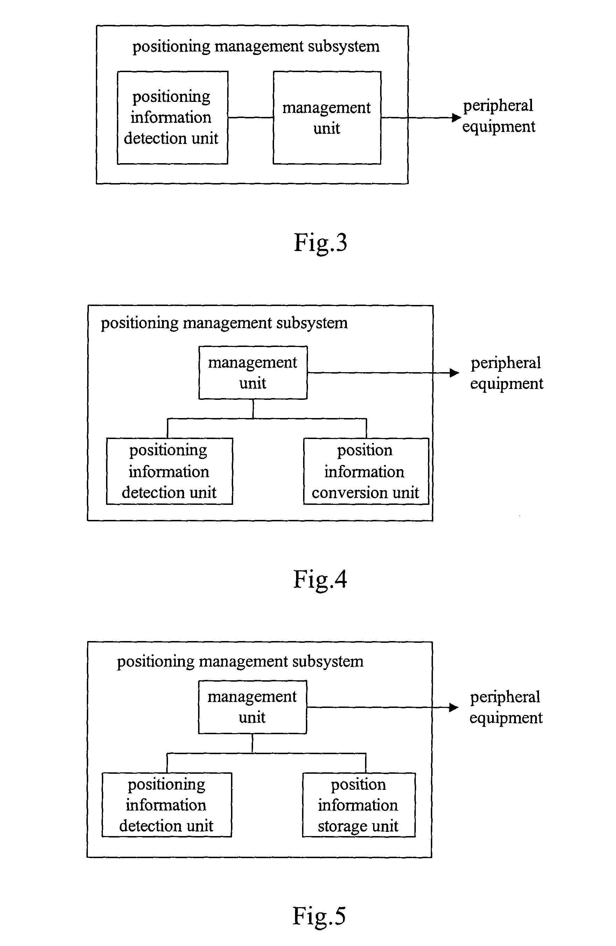

The specific structure of a positioning management subsystem is shown in Figure 3, at least comprising a positioning information detection unit and a management unit, which are interlinked for internal information interaction. The management unit is also connected with peripheral equipments, such as application clients, fulfilling information interaction between internal and external of the positioning management subsystem. Here, the management unit is connected to the positioning information detection unit and mainly used to control information interaction inside the subsystem and that between internal and external of the subsystem. The positioning information detection unit has two functions: one is the basic function of acquiring position information of UE; the other is to detect change of position information of user, i.e., detecting change of current position information of a specified UE or each UE in real-time or upon required, and to report this change to the positioning management subsystem either initiatively or passively.

In specific application, the positioning information detection unit can be an independent device, or be set in an AS, an AC, an AP or a UE as a functional module, or also be a combination of multiple sub functional modules which are respectively disposed in different devices. For example, the positioning information detection unit is formed by combination of several sub functional modules which are respectively disposed in an AS, an AC, an AP or a UE.

The primary function of the positioning management subsystem is as follows. When requiring position information of user, an application client sends a request to the positioning management subsystem. The management unit in the positioning management subsystem receives this request, and sends an order for requesting position information of user required by the application client to the positioning information detection unit. The positioning information detection unit acquires the required position information of user, then transmits it to the management unit which returns it to the application client. In fact, the so-called position information can be either access point identification information of the current access point corresponding to the present user, or be general position information obtained based on conversion of the access point identification information. Here, the access point identification information is an identifier that can be used to uniquely identify each access point in the covering service area of one positioning management subsystem, and can be denoted by a separately defined access point identification code, or be denoted by an identification code combined by a VLAN identification code of the current access point and a connection port number of the access point in a network control server. It can be seen that the covering area of an access point in the conventional WLAN structure is taken as the minimum position information unit for user positioning in the present invention, and access point identification or identification relating with an access point is taken as a position identification, thus providing high-precision user position data on this basis.

In practical application, this positioning management subsystem can be disposed in WLAN. Under this circumstance, the positioning management subsystem can be an independent device, or be disposed in an AS of WLAN as a functional module; or be disposed in an AC; or in an AP; or be directly disposed in a UE. The positioning management subsystem can also be constructed in combination of multiple functional modules respectively disposed in several different devices. For example, a certain unit of the positioning management subsystem is disposed inside a UE and another unit inside an AC or an AP, the two parts cooperating with each other to realize the acquiring operation of position information of the UE. However, the positioning management subsystem can also be disposed outside WLAN. Under this circumstance, the connection relationship between the positioning management subsystem and the UE and the WLAN access part is not to be changed, just that the communication may pass through different intermediate networks.

### System embodiment 1

As the access point identification information obtained by the positioning management subsystem usually cannot be directly identified or utilized by application clients, in order to provide more convenient and illustrative position information, as shown in Figure 4, a position information conversion unit is disposed in the basic positioning management subsystem. The position information conversion unit is used to convert the obtained access point identification information to an information format which can be identified by the application clients, such as specific geography location denoted by latitude and longitude together with height above sea level, a name of a geographical position area, a name of a building area, etc. This position information conversion unit is connected with the management unit which controls the information interaction and information transmission of the position information conversion unit. The position information conversion unit can also be interconnected with the positioning information detection unit either directly or via the management unit. In this case, the positioning information detection unit sends the obtained position information of UE to the position information conversion unit, after position information conversion, the converted information is sent out by the management unit.

### System embodiment 2

During practical user positioning, the position information of each UE can be acquired by the positioning management subsystem in real-time upon request of an application client; alternatively, the position information of each UE can be pre-stored in the positioning management subsystem, and be acquired from the stored information when required. Therefore, as shown in Figure 5, in order to store the position information of UE, a position information storage unit which can be a memory device or a database is disposed in the basic positioning management subsystem. This position information storage unit is connected with the management unit which controls the information interaction and information transmission of the position information storage unit. The position information storage unit can be interconnected to the positioning information detection unit either directly or via the management unit. In this case, the positioning information detection unit transmits the required position information of UE to the position information storage unit for storage, the management unit reads the information from the position information storage unit and sends it to peripheral equipments when required.

The positioning information detection unit can detect the change of position information of each user when required or in real time, and update the stored position information. Specifically speaking, when the position information of UE is pre-stored, the user's position information will be frequently changed since the UE has great mobility in practical application, therefore it is possible that the current position information of a target user to be queried by the application client is different from that stored in the positioning management subsystem. If the stored position information is still fed back to the application client, it will definitely lead to mishandling to this target user. Therefore, to guarantee the reliability of the returned user position information, after receiving a position information request from the application client, firstly the stored information of the current user is found in the position information storage unit, then the position of user is verified according to this position information. If the verification is successful, the stored position information is fed back to the application client. Otherwise, a flow of acquiring the actual position information of current user is initiated, the position information of the current user is updated in the position information storage unit, namely replaced with the position information obtained currently, then the new position information is fed back to the application client. Of course, the positioning information detection unit can monitor position change of each UE in real time, and update the stored information in the position information storage unit at any moment.

### System embodiment 3:

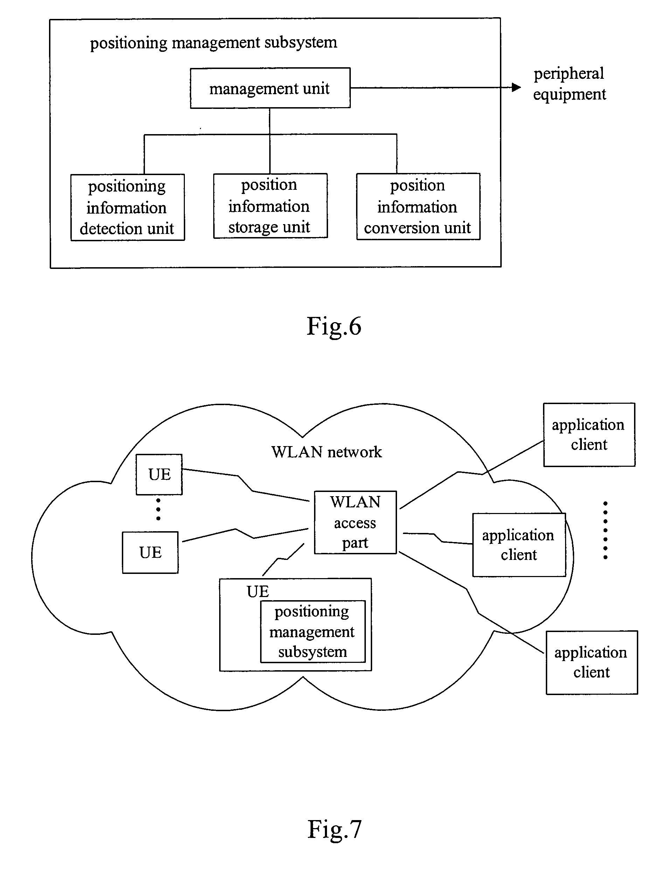

Figure 6 shows a positioning management subsystem according to a preferred embodiment of the present invention. As shown in Figure 6, a positioning management subsystem comprises a management unit, a positioning information detection unit, a position information storage unit and a position information conversion unit. The management unit is used to control information interaction among all units and information activation between the subsystem and peripheral equipments. The position information of UE acquired by the positioning information detection unit can be stored, then the stored information is fed back to an application client by the management unit; or the acquired position information of UE can be directly fed back to the application client by the management unit without being stored. The acquired position information can be placed into the position information storage unit at first, and then be implemented an information format conversion before being transmitted to peripheral equipments. Alternatively, the acquired position information can be implemented an information format conversion at first, and then the converted position information be stored, and be read out by the management unit when required, or the converted position information be sent to peripheral equipments by the management unit immediately. There are multiple flexible operation manners which can satisfy different demands for this system.

### System embodiment 4

Figure 7 shows a positioning management subsystem according to a preferred embodiment of the present invention. In this embodiment, the positioning management subsystem is disposed inside a certain UE as a functional module. All the application clients interact with the positioning management subsystem via a WLAN access part.

### System embodiment 5

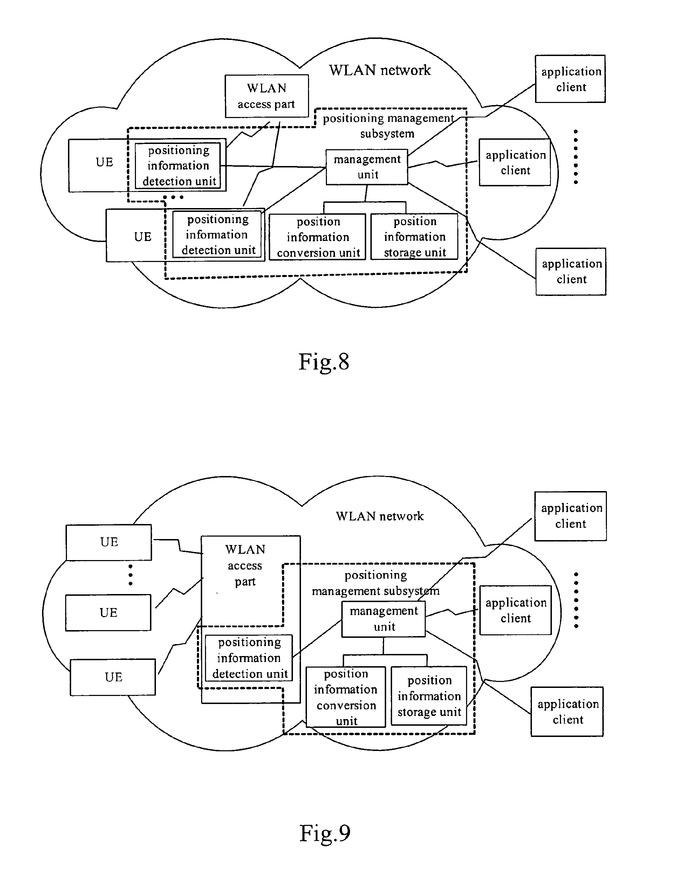

Figure 8 shows a positioning management subsystem according to a preferred embodiment of the present invention. In this embodiment, the several function units of the positioning management subsystem are separately disposed, namely the positioning management subsystem is composed of a position information conversion unit, a position information storage unit and a management unit, all of which are disposed collectively, together with positioning information detection units respectively disposed in each UE. On the requirement of an application client, the management unit receives the request information, and then sends an order of acquiring position information to a positioning information detection unit in a designated UE by way of wireless manner. The positioning information detection unit returns the current position information of this UE to the management unit which in turn feeds back this information to the corresponding application client. In this embodiment, the access point identification information denoting position information of UE is transmitted from the AP by way of broadcasting manner, and then is received by the UE in real time.

### System embodiment 6

Figure 9 shows a positioning management subsystem according to a preferred embodiment of the present invention. In this embodiment, the several function units of the positioning management subsystem are separately disposed, namely the positioning management subsystem is composed of a position information conversion unit, a position information storage unit and a management unit which are disposed collectively, together with a positioning information detection unit disposed in a WLAN access part. On the requirement of an application client, the management unit receives the request information, then sends an order of acquiring position information to a positioning information detection unit in the WLAN access part by way of wireless manner. The positioning information detection unit returns the current position information of this UE to the management unit which in turn feeds back this information to the corresponding application client. In this embodiment, the access point identification information denoting position information of UE is the information through which the AC can determine position of the UE based on the access information when the UE moves in a coverage area of an access point.

### System embodiment 7

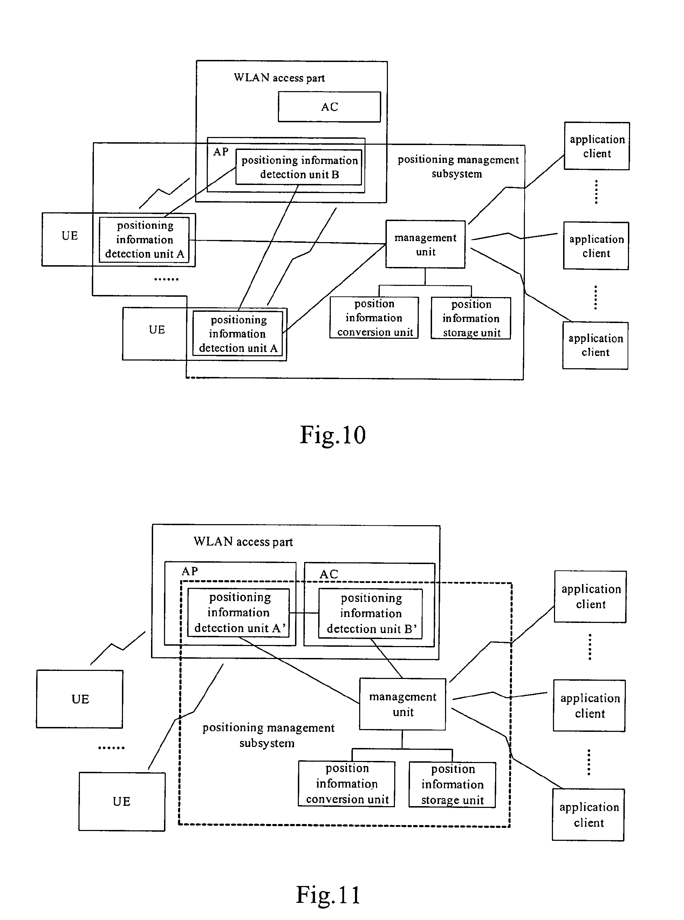

As shown in Figure 10, a positioning information detection unit of a positioning management subsystem is composed of part A and part B, which are respectively disposed inside a UE and an AP. The parts A and B cooperate with each other to obtain position information of the current UE. That is, the part B of the positioning information detection unit in the AP sends the access point identification information by way of broadcasting manner, the part A of the positioning information detection unit in the UE receives the information in real time for determining current position of itself, and then sends this determined position information to the management unit.

### System embodiment 8

As shown in Figure 11, a positioning information detection unit of a positioning management subsystem is composed of part A' and part B', which are respectively disposed inside an AP and an AC. The parts A' and B' cooperate with each other to obtain position information of the current UE. That is, the part B' of the positioning information detection unit in the AC sends a message to the part A' of the positioning information detection unit in the AP, requesting access point identification information of the AP. Upon receiving the request message, the part A' of the positioning information detection unit in the AP returns a response message to the part B' of the positioning information detection unit in the AC, carrying the identification information of itself. The AC obtains the position information of the current user based on received identification information and sends it to the management unit.

In practical application, according to the specific circumstance or the user's actual requirements, the above-mentioned position information conversion unit and position information storage unit can be disposed optionally or even not disposed. Moreover, according to demand and for convenient operation, the positioning management subsystem or each unit in the subsystem can be disposed in arbitrary locations, so that the implementation of the present invention can be more flexible.

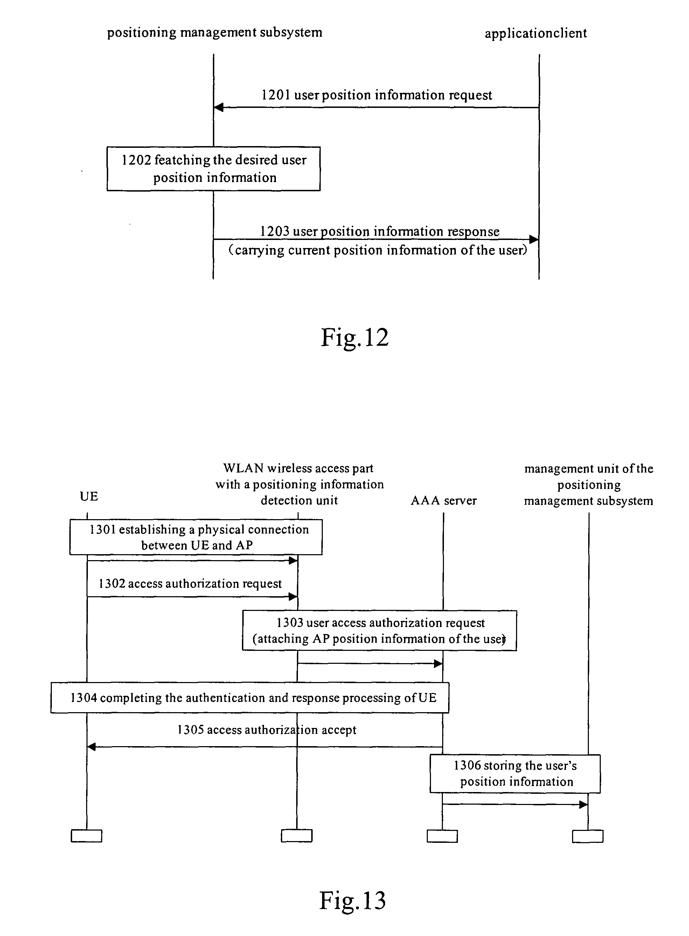

In the user positioning system provided in the present invention, the method for implementing user positioning is shown in Figure 12, mainly comprising the following steps:
In step 1201, when demanding to acquire the position information of a certain WLAN user, an application client sends a user position information request to the positioning management subsystem.
In step 1202, after receiving the user position information request, the positioning management subsystem reads out the current access point identification information of the WLAN user and takes it as the position information of this user.
In step 1203, the positioning management subsystem sends a user position information response containing the position information to the application client, notifying it of the current position of the user.

Here, the course of acquiring the required current position information of the WLAN user is actually fetching the access point identification information of the current access point, and the access point identification information can be of many denoting manners, as is described hereinbefore. In step 1202 there are two methods to acquire user's position information: either acquiring it from the position information pre-stored in the positioning management subsystem or acquiring it in real time. Under the latter circumstance, the position information can be acquired either from UEs or from the wireless access controller. As to pre-storing, the position information can be stored in the positioning management subsystem when the user accesses a different access point, or stored in the UE by itself.

### Method embodiment 1

When a WLAN UE accesses a new AP, this AP sends its own access point identification information serving as position information of user to the positioning management subsystem which then stores it. In the present embodiment, the function of positioning information detection unit is implemented in AP by utilizing the access function and the existing signaling flow of AP, the flow of storing position information is shown in Figure 13, comprising the following steps:

In step 1301, when a user entering a covering area of a certain AP initiates access and registration procedure, firstly a physical connection is set up between the UE and the AP in WLAN.

In steps 1302~1304, after the connection between the UE and the AP has been set up, the user access authentication procedure is initiated. That is, the UE sends a user access authorization request to the AS via WLAN, the AS then implements authentication and authorization for the UE. Here, the AP places the current user information and the AP identification information in the user access authorization request message which is transmitted to the AS. A single AP identification information element can be set for the current user information and the AP identification information can, or an existing information element can be used.

In steps 1305~1306, after the authorization is passed, the AS sends an access authorization accept message to the UE, notifying UE of access permission; meanwhile, the AS sends the AP identification information of this UE to the positioning management subsystem for storage as position information of user. When legal application clients of the current network or other networks demand to acquire this user's position information, they can directly request the information from the positioning management subsystem.

In the above process, the user's registration procedure entirely takes use of the existing registration signaling. Each time the user enters a new AP covering area, steps 1301~1306 are repeated, refreshing the storage record of the positioning management subsystem. The positioning management subsystem will also periodically verify whether the user is online or will detect the current position of each UE at any moment. If the user's status or position has been changed, for instance, the user is offline or turns into a new access point, the user's position information stored in the positioning management subsystem is updated immediately. If the user is annulled, the positioning management subsystem will delete this user's position information record or label the corresponding information as invalid.

In order to guarantee the reliability of the current user's position information, after receiving the request from an application client, the positioning management subsystem can also verify the current user's position information again. If consistent, the stored information will be adopted; otherwise, the actual position information will be adopted and the stored information will be updated simultaneously. Here, the verification of user's position information by the positioning management subsystem can be implemented by the way of sending the user's online status and position confirmation message to the AP, the AC or the current UE and making a judgment based on the returned confirmation message.

Of course, in step 1303, the transmission of user's position information can be attached in any proper existing signaling. As is described in the above embodiment, a special position information transmission signaling can be set also. Moreover, The identification information of AP can be directly transmitted to the AS from the AP, or can be transmitted to the AS from the AC, or can also be transmitted directly to the AS from the UE or to the positioning management subsystem for storage. In other words, the positioning information detection unit of the positioning management subsystem can use the access function of AP, or access control function of AC, or emission point receiving and recognition ability of UE.

Since the identification information of access point is usually unidentifiable for application clients, or is identifiable but inconvenient to use, before sending position information to an application client, the positioning management subsystem must convert the access point identification information to standard geographical position data, such as latitude and longitude plus height above sea level information, or convert it to a specific geographical position such as a certain room on a certain floor in a certain building according to the network characteristics of WLAN. The conversion course can be completed before finish of position information storage, or after the position information is read out from the position information storage unit.

### Method embodiment 2

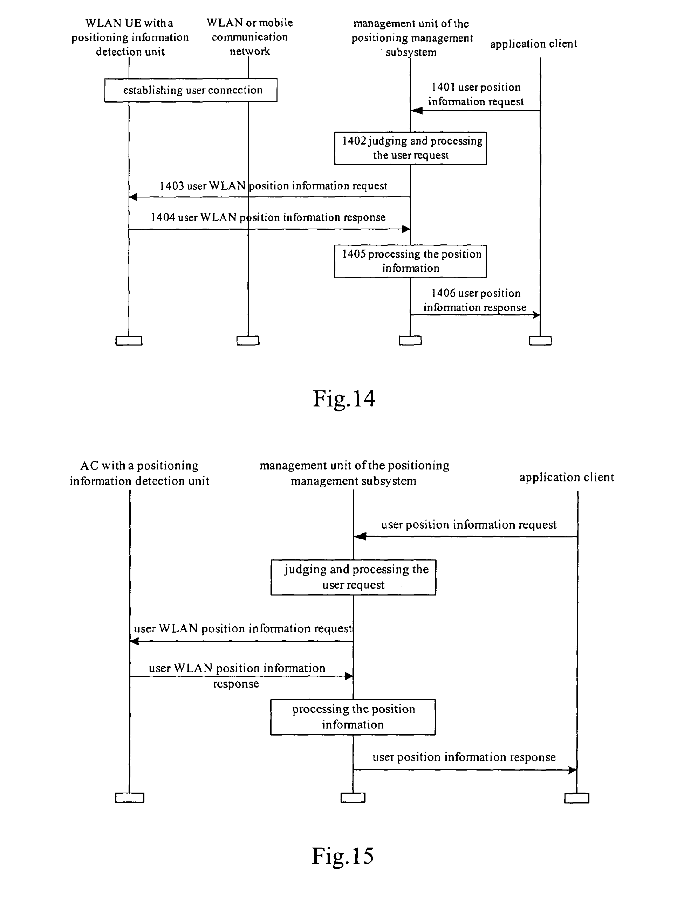

After a UE enters a covering area of a certain WLAN access point, firstly a wireless connection is established between this UE and the current access point. Meanwhile, the UE acquires the identification information of the current access point through interacting with the access point. In the present embodiment, the positioning information detection unit of the positioning management subsystem is realized by directly utilizing the emission point receiving and identifying ability of the UE together with the existing signaling flow. Besides, the storage ability of UE can also be utilized to implement the function of the position information storage unit. As shown in Figure 14 in which an embodiment of acquiring user's position information by the application clients is illustrated, the flow of this embodiment is as follows:
In steps 1401~1402, when demanding to acquire position information of a UE, an application client sends a user WLAN position information request to the positioning management subsystem. The positioning management subsystem judges and processes this request after receiving it, for instance, judging whether this request is a user position information request, and judging whether the application client is authorized to acquire the position information of UE, etc.
In step 1403, if the request is legal, the management unit of the positioning management subsystem sends a user WLAN position information request to the positioning information detection unit in UE either via WLAN or via a mobile communication network using common data packet.
In step 1404, after receiving this request, the positioning information detection unit of UE places the access point identification information of the current access point in a user WLAN position information response and sends the response to the positioning management subsystem. Here, if the current UE is not only a WLAN user, but also a user of other mobile communication networks, after acquiring position information according to the current access point, the UE can arbitrarily choose a network to transmit this position information, either WLAN or other mobile communication networks.

The UE chooses a transmission network based on configuration, for example the priorities of transmission networks are configured. The UE identifies the position information request transmitted with different carrying modes, and this request can be transmitted to the management unit of the positioning management subsystem through WLAN or mobile communication network in a data transmission mode, which can be provided by the network between the positioning information detection unit in UE and the positioning management subsystem, such as data packet, short message or non-structuring complementary service data.

In steps 1405~1406, after receiving the position information, the management unit of the positioning management subsystem performs corresponding processing, for example, converts the access point identification information to general position information format or a position information format supported by the application client, then sends user position information to the application client so that the application client could get the position information of the UE.

### Method embodiment 3

After a UE enters a covering area of a certain WLAN access point, the AC of WLAN will get the access point identification information corresponding to this UE. Then, as shown in Figure 15, the process of acquiring user position information by the application client is similar to that shown in Figure 14. In the present invention, the function of the positioning information detection unit in AC is implemented by utilizing access control ability of AC and the existing signaling flow. In addition, the storage ability of AC can also be utilized to implement function of the positioning information detection unit. The management unit of the positioning management subsystem sends a user WLAN position information request to the positioning information detection unit in AC, and acquires access point identification information of the current UE from the AC, and the user WLAN position information response is also returned by AC.

The above description is just preferable embodiments of the present invention, not limiting the protection scopes of this invention.

## Claims

1. A user positioning system for Wireless Local Area Network (WLAN), comprising more than one User Equipment (UE) and a WLAN access part, **characterized in that** this system further comprises a positioning management subsystem for acquiring position information of WLAN users and providing the desired user position information to an application client which requests position information to the positioning management subsystem; wherein the positioning management subsystem is connected with both of the UEs and the application client, and the positioning management subsystem further comprises:
a management unit, for controlling information interaction process inside the positioning management subsystem and that between the positioning management subsystem and the outside; and
a positioning information detection unit connected with said managing unit, for acquiring user's position information and detecting change of user's position information.

2. The system of claim 1, **characterized in that** said positioning management subsystem is connected with UEs either directly or via the WLAN access part.

3. The system of claim 1, **characterized in that** said positioning management subsystem is an independent device; or is a functional module disposed in an Authenticating, authorization and accounting Sever (AS); or is a functional module disposed in a WLAN Access Controller (AC); or is a functional module disposed in an Access Point (AP); or is a functional module disposed in a UE; or is a combination of more than one functional module respectively disposed in arbitrary multiple devices among AS, AP, AC and UE.

4. The system of claim 1, **characterized in that** said positioning management subsystem further comprises a position information conversion unit for converting access point identification information to general geography position data.

5. The system of claim 4, **characterized in that** said general geography position data is denoted by latitude and longitude together with height above sea level, or denoted by geographical position area name or architecture area name.

6. The system of claim 1, **characterized in that** said positioning management subsystem further comprises a position information storage unit for storing user position information.

7. The system of claim 1, **characterized in that** said positioning information detection unit is an independent device; or is a functional module disposed in an AS; or is a functional module disposed in a WLAN AC; or is a functional module disposed in an AP; or is a functional module disposed in a UE; or is a combination of more than one functional module respectively disposed in arbitrary multiple devices among AS, AP, AC and UE.

8. A method for implementing user positioning with the above system in WLAN, comprising:
a. when demanding to acquire position information of a WLAN UE, an application client sending a user position information request to the positioning management subsystem; and
b. after receiving the user position information request, the positioning management subsystem acquiring position information of said WLAN UE, and placing the acquired position information in a user position information response, then sending said response to the application client.

9. The method of claim 8, **characterized in that** the position information of a WLAN UE is access point identification information of the access point to which the current UE is connected; or is data information with a format of general geographical position converted from the access point identification information of the access point to which the current UE is connected by the positioning management subsystem.

10. The method of claim 9, **characterized in that** said access point identification information is an access point identifier which is defined individually and used for uniquely identifying each access point in a positioning management subsystem service area, or is an identifier which is combined by a virtual local network identifier of the current access point and the connection port number of this access point in a network control server and used for uniquely identifying each access point in a positioning management subsystem service area.

11. The method of claim 8, **characterized in that** the method further comprises: after a WLAN UE enters a different access point, the positioning information detection unit transmitting the user position information to the positioning management subsystem which stores the received user position information; the positioning management subsystem fetching the desired position information of the UE from the user position information stored in itself.

12. The method of claim 11, **characterized in that** said user position information is transmitted to the positioning management subsystem in the state of being placed in an existing information element of the user access authorization request message; or being placed in a newly-added information element of the user access authorization request message; or being placed in a position information transmission signaling which is set individually.

13. The method of claim 11, **characterized in that** the method further comprises:
when detecting offline of the user, the positioning management subsystem immediately deleting position information of this user from the stored information; or setting position information of this user as invalid and deleting position information of this user after preservation for a certain period.

14. The method of claim 11, **characterized in that** the method further comprises:
when detecting change of the access point to which the UE is connected, the positioning management subsystem immediately updating position information of this user in the interior position information storage unit.

15. The method of claim 11, **characterized in that** the method further comprises: after receiving the user position information request from the application client, the positioning management subsystem judging whether the stored position information of this user is consistent with this user's actual position information, if so, sending the stored position information to the application client; otherwise, updating the stored position information of this user and sending the updated position information to the application client.

16. The method of claim 15, **characterized in that** the step of judging whether the stored position information of this user is consistent with this user's actual position information comprises: the management unit of the positioning management subsystem sending user's online state and a position confirmation message to the positioning information detection unit, and the position information storage unit performing judgment based on the returned confirmation message.

17. The method of claim 8, **characterized in that** the step of acquiring position information of WLAN UE in step b comprises:
b11. after the positioning management subsystem receives the user position information request from the application client, the management unit sending a user WLAN position information request to the positioning information detection unit of the corresponding destination UE; and
b 12. after receiving the user WLAN position information request, the positioning information detection unit of this destination UE returning the managing unit of the positioning management subsystem a user WLAN position information response carrying access point identification information of the current access point to which the destination UE is connected.

18. The method of claim 17, **characterized in that** step b 11 further comprises: after receiving the user position information request, the positioning management subsystem judging whether the application client is authorized to acquire position information of the destination UE, if so, executing step b12; otherwise, rejecting the user position information request.

19. The method of claim 17, **characterized in that** said user WLAN position information request and user WLAN position information response are transmitted by way of a data transmission manner that can be provided by a network between the destination UE and the positioning management subsystem.

20. The method of claim 8, **characterized in that** the step of acquiring position information of WLAN UE in step b comprises:
b21. after the positioning management subsystem receives the user position information request from the application client, the management unit sending a user WLAN position information request to the positioning information detection unit of the AC; and
b22. after receiving the user WLAN position information request, the positioning information detection unit returning the managing unit of the positioning management subsystem a user WLAN position information response carrying access point identification information of the current access point to which the destination UE is connected.

21. The method of claim 20, **characterized in that** step b21 further comprises: after receiving the user position information request, the positioning management subsystem judging whether the application client is authorized to acquire position information of the destination UE, if so, executing step b22; otherwise, rejecting the user position information request.
